# EUROPÄISCHE PATENTSCHRIFT

(11) **EP 0 309 675 B1**
(45) Veröffentlichungstag und Bekanntmachung des Hinweises auf die Patenterteilung: **10.03.1993**
(21) Anmeldenummer: 88111951.5
(22) Anmeldetag: 25.07.1988
(51) Int. Cl.: G11B 11/10

(54) **Verfahren zur Dämpfung des Rauschens für eine optische Abtastvorrichtung**
Noise damping method for an optical pick-up device
Méthode pour atténuer le bruit dans un dispositif d'exploration optique

(30) Priorität: 30.09.1987 DE 3732944
(43) Veröffentlichungstag der Anmeldung: 05.04.1989
(73) Patentinhaber: Deutsche Thomson-Brandt GmbH, 78003 Villingen-Schwenningen (DE)
(72) Erfinder: Morimoto, Yasuaki, D-7730 Villingen-Schwenningen (DE); Zucker, Friedhelm, D-7730 Villingen-Schwenningen (DE)

(56) Entgegenhaltungen:
- FR-A- 2 533 732
- PATENT ABSTRACTS OF JAPAN, Band 9, Nr. 24 (P-331)[1747], 31. Januar 1985; & JP-A-59 168 951

## Beschreibung

Die Erfindung betrifft ein Verfahren zur Dämpfung des Rauschens im Datensignal für eine optische Abtastvorrichtung zur Abtastung eines magneto-optischen Aufzeichnungsträgers nach der Dreistrahlmethode mit einem optisch beugend wirkenden Element, bei der derjenige Hauptstrahl, dessen Polarisationsebene in die eine Richtung gedreht ist, vom magneto-optischen Aufzeichnungsträger auf einen ersten Photodetektor reflektiert wird, und derjenige Hauptstrahl, dessen Polarisationsebene in die andere Richtung gedreht ist, vom magneto-optischen Aufzeichnungsträger auf einen zweiten Photodetektor reflektiert wird, und bei der das Datensignal aus der Differenz der Photospannungen des ersten und zweiten Photodetektors gebildet wird.

Aufbau und Funktion einer optischen Abtastvorrichtung, eines sogenannten optical pick-ups, für einen CD-Spieler sind in electronic components & applications, Vol. 6, No 4, 1984 auf Seite 209 - 215 beschrieben.

Wie unter Ausnutzung des Kerr-Effektes Daten auf eine magneto-optische Platte geschrieben und von ihr gelesen werden, ist in dem Aufsatz "Magnetooptische Versuche dauern an" in Funkschau 13, 20 Juni 1986 auf Seite 37 - 41 beschrieben.

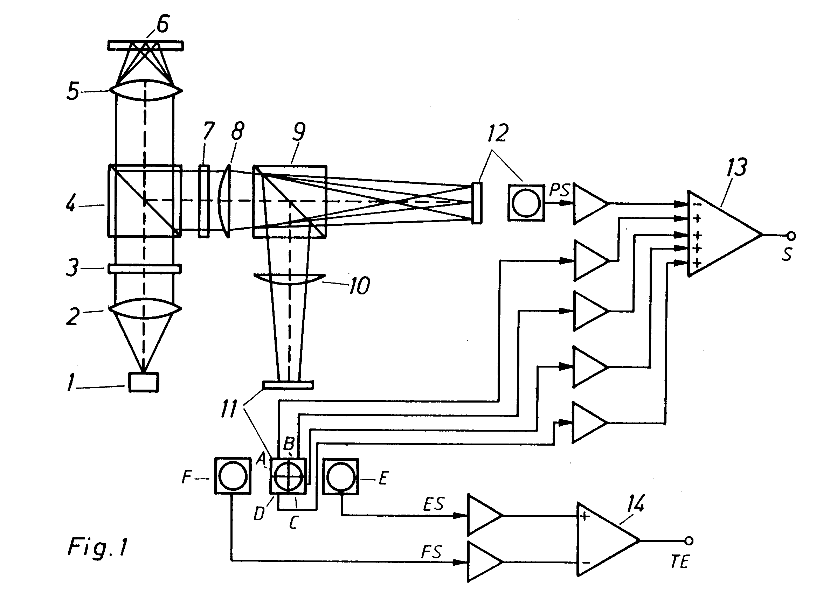

In Figur 1 ist eine optische Abtastvorrichtung gezeigt, bei der nach der Dreistrahlmethode eine magneto-optische Platte 6 gelesen wird. Der von einer Lichtquelle 1, meist eines Lasers, ausgesendete Lichtstrahl wird über eine Linse 2, ein Beugungsgitter 3, einen Prismenstrahlteiler 4 und eine weitere Linse 5 auf die magneto-optische Platte 6 fokussiert. Wegen des Beugungsgitters 3 wird der Lichtstrahl in einen Hauptstrahl sowie in Strahlen + 1., - 1., + 2., - 2. usw. Ordnung aufgeteilt. Der Hauptstrahl dient zum Lesen der Daten ,während die beiden Strahlen + 1. Ordnung und - 1. Ordnung zur Erzeugung des Spurfehlersignals TE = ES - FS benutzt werden. Die von der magneto-optischen Platte 6 reflektierten Stahlen, der Hauptstrahl sowie die Strahlen + 1. und - 1. Ordnung, deren Polarisationsebenen je nach der Magnetisierungsrichtung der magneto-optischen Platte 6 im Fokus nach rechts oder links gedreht wird, laufen über die Linse 5 zurück zum Prismenstrahlteiler 4, der sie im rechten Winkel über eine X/2-Platte 7 und eine Linse 8 zu einem Polarisationsstrahlteiler 9 lenkt. Der in die eine Richtung, z.B. nach rechts, gedrehte Hauptstrahl gelangt über eine Linse 10 auf einen Photodetektor 11, der aus vier Quadranten A, B, C und D aufgebaut ist, während der nach links gedrehte Hauptstrahl auf einen Photodetektor 12 gelenkt wird. Der Strahl + 1. Ordnung, dessen Polarisationsebene nach rechts gedreht ist, wird über die Linse 10 auf einen Photodetektor F gelenkt, während der Strahl - 1. Ordnung, dessen Polarisationsebene ebenfalls nach rechts gedreht ist, über die Linse 10 auf einen Photodetektor E fällt. Der in die andere Richtung - beim angegebenen Beispiel nach links - gedrehte Hauptstrahl sowie die ebenfalls nach links gedrehten Strahlen + 1. und - 1. Ordnung fallen auf einen Photodetektor 12, dessen Photospannung PS dem Subtraktionseingang eines Differenzverstärkers 13 zugeführt wird. Die Ausgangsspannungen AS, BS, CS und DS der Quadranten A, B, C und D werden den Additionseingängen des Differenzverstärkers 13 zugeführt, an dessen Ausgang das Datensignal S = AS + BS + CS + DS - PS abnehmbar ist. Die Photospannung ES des Photodetektors E wird an den Additionseingang eines Differenzverstärkers 14 gelegt, während die Photospannung des Photodetektors F dem Subtraktionseingang des Differenzverstärkers 14 zugeführt wird. Am Ausgang des Differenzverstärkers 14 ist deshalb das Spurfehlersignal TE = ES - FS abnehmar.

Weil auf den Photodetektor 11 mit den Quadranten A, B, C und D nur der Hauptstrahl, dagegen auf den Photodetektor 12 neben dem Hauptstrahl auch die Strahlen höherer und niederer als 0. Ordnung fallen, wird das Rauschen im Datensignal S erhöht. Um nun dieses unerwünschte Rauschen, das durch Beugungsprodukte - die Strahlen höherer und niederer Ordnung - verursacht wird, zu vermeiden, ist der Photodetektor 12 so genau zu justieren, daß nur noch der Hauptstrahl auf ihn trifft. Eine derartige erforderliche schwierige Justage im Bereich von etwa 100 m erfordert nicht nur viel Fingerspitzengefühl, sondern nimmt auch viel Zeit in Anspruch.

Es ist daher Aufgabe der Erfindung, ein Verfahren zur Dämpfung des Rauschens im Datensignal für eine optische Abtastvorrichtung gemäß Oberbegriff des Anspruchs 1 so zu gestalten, daR eine Erhöhung des Rauschens im Datensignal infolge der Beugungsprodukte höherer und niederer als 0. Ordnung vermieden wird, ohne hierzu den zweiten Photodetektor genau justieren zu müssen.

Die Erfindung löst diese Aufgabe dadurch, daß auf den zweiten Photodetektor auch die Strahlen + 1. Ordnung und höherer als + 1. Ordnung und -1. Ordnung und niederer als - 1. Ordnung deren Polarisationsebene in die andere Richtung gedreht sind auftreffen und daß zur Erzeugung des Datensignals von der Differenz der Potospannung des ersten Photodetektors und der Photospannung PS des zweiten Photodetektors mindestens die von den Strahlen + 1. und - 1. Ordnung deren Polarisationsebene in die eine Richtung gedreht sind erzeugten Photospannungen abgezogen werden.

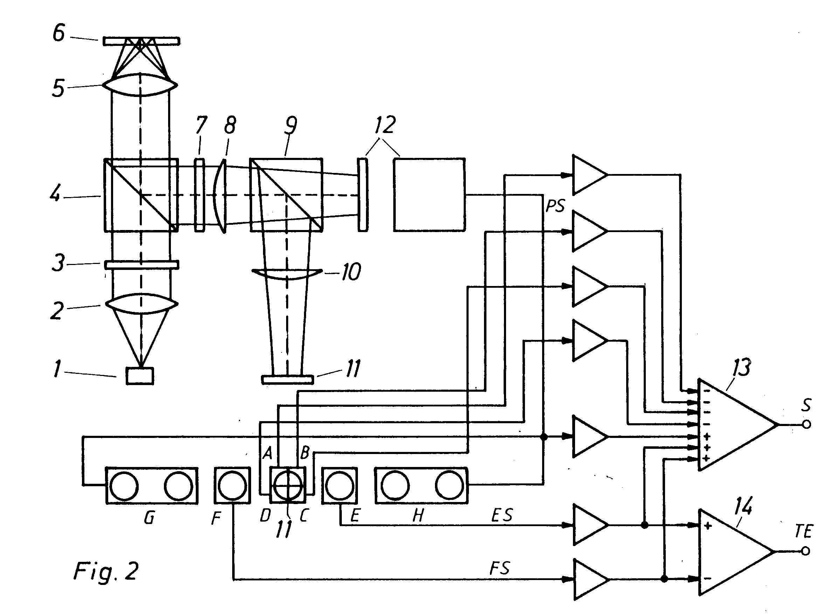

Anhand des in Figur 2 gezeigten Ausführungsbeispieles wird die Erfindung nun erläutert.

Wie in der Figur 1 wird der ausgesendete Lichtstrahl über eine Linse 2, ein Beugungsgitter 3, einen Prismenstrahlteiler 4 und eine weitere Linse 5 auf die magneto-optische Platte 6 fokussiert. Wegen des Beugungsgitters 3 wird der Lichtstrahl in einen Hauptstrahl sowie in Strahlen + 1., - 1., + 2., - 2. usw. Ordnung aufgeteilt. Der Hauptstrahl dient zum Lesen der Daten, während die beiden Strahlen + 1. und - 1. Ordnung zur Erzeugung des Spurfehlersignals TE = ES - FS benutzt werden. Die von der magneto-optischen Platte 6 reflektierten Strahlen, der Hauptstrahl und die Strahlen + 1. und - 1. Ordnung, deren Polarisationsebene je nach der Magnetisierungsrichtung der magneto-optischen Platte 6 im Brennpunkt des Hauptstrahls nach rechts oder links gedreht wird, laufen über die Linse 5 zurück zum Strahlteiler 4, der sie im rechten Winkel über eine X/2-Platte 7 und eine Linse 8 zu einem Polarisationsstrahlteiler 9 lenkt. Der in die andere Richtung, z.B. nach rechts, gedrehte Hauptstrahl gelangt über eine Linse 10 auf einen Photodetektor 11, der aus vier Quadranten A, B, C und D aufgebaut ist, während der nach links gedrehte Hauptstrahl auf einen Photodetektor 12 gelenkt wird. Der Strahl + 1. Ordnung, dessen Polarisationsebene nach rechts gedreht ist, wird über die Linse 10 auf einen Photodetektor F gelenkt, dagegen fällt der Strahl - 1. Ordnung, dessen Polarisationsebene ebenfalls nach rechts gedreht ist, über die Linse 10 auf einen Photodetektor E. Der in die andere Richtung - beim angegebenen Beispiel nach links - gedrehte Hauptstrahl sowie die ebenfalls nach links gedrehten Strahlen + 1. und - 1. Ordnung fallen auf einen Photodetektor 12. Die Photospannung ES des Photodetektors E wird dem ersten Additionseingang eines Differenzverstärkers 13, an dessen Ausgang das Datensignal S abnehmbar ist, und dem Additionseingang eines Differenzverstärkers 14 zugeführt. Die Photospannung FS des Photodetektors F wird an den zweiten Additionseingang des Differenzverstärkers 13 und an den Subtraktionseingang des Differenzverstärkers 14 gelegt, an dessen Ausgang das Spurfehlersignal TE = ES - FS abnehmbar ist. Die Photospannungen AS, BS, CS und DS der einzelnen Quadranten A, B, C und D des Photodetektors 11 werden an je einen Subtraktionseingang des Differenzverstärkers 13 gelegt. Neben dem Photodetektor F ist ein Photodetektor G derart angeordnet, daß auf ihn die Strahlen höherer als + 1. Ordnung fallen. Neben dem Photodetektor E ist ein Photodetektor H derart angeordnet, daß auf ihn die Strahlen niederer als - 1. Ordnung fallen. Die Photospannungen GS, HS und PS der Photodetektoren G, H und 12 werden je einem Additionseingang des Differenzverstärkers 13 zugeführt. Im Differenzverstärker 13 wird daher das Datensignal S = ES + FS + GS + HS + PS - (AS + BS + CS + DS) gebildet, das nur noch das Differenzsignal der beiden Strahlen 0. Ordnung - des nach rechts und des nach links gedrehten Hauptstrahls - darstellt, weil die von den Beugungsprodukten höherer und niederer als 0. Ordnung verursachten Photospannungen ES, FS, GS und HS von der Photospannung PS, der Summe aller Photospannungen abgezogen werden. Weil die Photospannungen ES, FS, GS und HS um 180° gegen die im Photodetektor 12 von den Beugungsprodukten höherer und niederer als 0. Ordnung erzeugten Photospannungen phasenverschoben sind, werden sie additiv miteinander verknüpft.

Weil von der Photospannung PS, der Summe aus der vom Hauptstrahl und von den Beugungsprodukten, deren Polarisationsebene in die eine Richtung gedreht ist, erzeugten Photospannungen, die von den Beugungsprodukten verursachten Photospannungen im Differenzverstärker 13 abgezogen werden, kann für den Photodetektor 12 ein relativ großer Photodetektor gewählt werden, der nicht so genau wie eingangs erwähnt, sondern nur grob justiert zu werden braucht.

Das in Figur 2 gezeigte Ausführungsbeispiel läßt sich dadurch vereinfachen, daß auf die Photodetektoren G und H verzichtet wird. Zwar werden von der Photospannung PS des Photodetektors 12 dann nur noch die von den Beugungsprodukten + 1. und - 1. Ordnung verursachten Photospannungen abgezogen, jedoch läßt sich bereits damit eine beträchtliche Verringerung des Rauschens im Datensignal S erzielen.

## Patentansprüche

1. Verfahren zur Dämpfung des Rauschens im Datensignal für eine optische Abtastvorrichtung zur Abtastung eines magneto-optischen Aufzeichnungsträgers (6) nach der Dreistrahlmethode mit einem optisch beugend wirkenden Element (3), bei der derjenige Hauptstrahl, dessen Polarisationsebene in die eine Richtung gedreht ist, vom magneto-optischen Aufzeichnungsträger (6) auf einen ersten Photodetektor (11) reflektiert wird, und der derjenige Hauptstrahl, dessen Polarisationsebene in die andere Richtung gedreht ist, vom magneto-optischen Aufzeichnungsträger (6) auf einen zweiten Photodetektor (12) reflektiert wird, und bei der das Datensignal aus der Differenz der Photospannungen des ersten und zweiten Photodetektors (11, 12) gebildet wird, dadurch gekennzeichnet, daß auf den zweiten Photodetektor (12) auch die Strahlen +1. Ordnung und höherer als + 1. Ordnung und -1. Ordnung und niedererals - 1. Ordnung deren Polarisationsebenen in die andere Richtung gedreht sind, auftreffen und daß zur Erzeugung des Datensignals (S) von der Differenz der Photospannung des ersten Photodetektors (11) und der Photospannung PS des zweiten Photodetektors (12) mindestens die von den Strahlen + 1. und - 1. Ordnung deren Polarisationsebenen in die eine Richtung gedreht sind erzeugten Photospannungen abgezogen werden.

2. Verfahren nach Anspruch 1, dadurch gekennzeichnet, daß ein dritter Photodetektor (E) vorgesehen ist, auf den der Strahl + 1. Ordnung dessen Polarisationsebene in die eine Richtung gedreht ist vom magneto-optischen Aufzeichnungsträger reflektiert wird, daß ein vierter Photodetektor (F) vorgesehen ist, auf den der Strahl - 1. Ordnung dessen Polarisationsebene in die eine Richtung gedreht ist vom magneto-optischen Aufzeichnungsträger (6) reflektiert wird, daß aus der Differenz der Photospannungen ES und FS des dritten und vierten Photodetektors (E, F) ein Spurfehlersignal TE = ES - FS gebildet wird und daß die Photospannungen ES und FS von der Differenz der Photospannung des ersten Photodetektors (11) und der Photospannung PS des zweiten Photodetektors (12) abgezogen werden.

3. Verfahren nach Anspruch 2, dadurch gekennzeichnet, daß ein fünfter Photodetektor (G) vorgesehen ist, auf den der magneto-optische Aufzeichnungsträger (6) die Strahlen höherer als + 1. Ordnung deren Polarisationsebenen in die eine Richtung gedreht sind reflektiert, daß ein sechster Photodetektor (H) vorgesehen ist, auf den der magneto-optische Aufzeichnungsträger (6) die Strahlen niederer als - 1. Ordnung deren Polarisationsebenen in die eine Richtung gedreht sind reflektiert, und daß die Photospannungen GS und HS des fünften und sechsten Photodetektors (G,H) von der Differenz der Photospannung des ersten Photodetektors (11), der Photospannung des zweiten Photodetektors (12) und der Photospannungen des dritten und vierten Photodetektors (E,F) abgezogen werden.

## Claims

1. Method for the attenuation of the noise in the data signal for an optical scanning device for the scanning of a magneto-optic recording medium (6) according to the three beam method using an element (3) effecting optical diffraction, in which that main beam whose plane of polarisation is rotated in the one direction, is reflected from the magneto-optic recording medium (6) onto a first photo detector (11) and that main beam whose plane of polarisation is rotated in the other direction, is reflected from the magneto-optic recording medium (6) onto a second photo detector (12) and in which the data signal is formed from the difference of the photo-electric voltages of the first and second photo detectors (11, 12), characterised in that, the beams of + 1 st order and higher than + 1 st order and -1 st order and lower than -1 st order whose planes of polarisation are rotated in the other direction also impinge on the second photo detector (12), and that, for the production of the data signal (S), at least the photo-electric voltages produced by the beams of + ₁ st and -1 st order whose planes of polarisation are rotated in the one direction are subtracted from the difference of the photo-electric voltage of the first photo detector (11) and the photo-electric voltage PS of the second photo detector (12).

2. Method in accordance with claim 1, characterised in that, there is provided a third photo detector (E) onto which the beam of +1st order whose plane of polarisation is rotated in the one direction, is reflected from the magneto-optic recording medium, that there is provided a fourth photo detector (F) onto which the beam of -1 st order whose plane of polarisation is rotated in the one direction is reflected from the magneto-optic recording medium (6), that a tracking error signal TE = ES - FS is formed from the difference of the photo-electric voltages ES and FS of the third and fourth photo detectors (E, F) and that the photo-electric voltages ES and FS are subtracted from the difference of the photo-electric voltage of the first photo detector (11) and the photo-electric voltage PS of the second photo detector (12).

3. Method in accordance with claim 2, characterised in that, there is provided a fifth photo detector (G) onto which the beams of higher than + 1 st order whose planes of polarisation are rotated in the one direction, are reflected from the magneto-optic recording medium (6), that there is provided a sixth photo detector (H) onto which the beams of lower than -1 st order whose planes of polarisation are rotated in the one direction are reflected from the magneto-optic recording medium (6), and that the photo-electric voltages GS and HS of the fifth and sixth photo detector (G, H) are subtracted from the difference of the photo-electric voltage of the first photo detector (11), from the photo-electric voltage of the second photo detector (12) and the photo-electric voltages of the third and fourth photo detector (E,F).

## Revendications

1. Méthode pour atténuer le bruit dans le signal de données pour un dispositif d'exploration optique pour l'exploration d'un support d'enregistrement magnéto-optique (6) selon la méthode des trois faisceaux avec un élément qui a un effet de diffraction optique (3) selon laquelle le faisceau principal, dont le plan de polarisation est tourné dans un sens, est réfléchi par le support d'enregistrement magnéto-optique (6) sur un premier détecteur photoélectrique (11) et le faisceau principal, dont le plan de polarisation est tourné dans l'autre sens, est réfléchi par le support d'enregistrement magnéto-optique (6) sur un second détecteur photoélectrique (12) et selon laquelle le signal de données est formé à partir de la différence des tensions photoélectriques du premier et du second détecteur photoélectrique (11, 12) caractérisée en ce que les faisceaux de l'ordre + 1 et supérieurs à l'ordre + 1 et de l'ordre - 1 et inférieurs à l'ordre - 1, dont les plans de polarisation sont tournés dans l'autre sens, tombent également sur le second détecteur photoélectrique (12) et que, pour produire le signal de données (S) au moins les tensions photoélectriques produites par les faisceaux de l'ordre + 1 et - 1, dont les plans de polarisation sont tournés dans l'un des sens, sont soustraites de la différence de la tension photoélectrique du premier détecteur photoélectrique (11) et de la tension photoélectrique PS du second détecteur photoélectrique (12).

2. Méthode selon la revendication 1 caractérisée en ce qu'un troisième détecteur photoélectrique (E) est prévu sur lequel est réfléchi le faisceau de l'ordre + 1, dont le plan de polarisation est tourné dans l'un des sens, par le support magnéto-optique, qu'un quatrième détecteur photoélectrique (F) est prévu sur lequel est réfléchi le faisceau de l'ordre - 1, dont le plan de polarisation est tourné dans l'une des sens, par le support magnéto-optique (6), qu'un signal d'erreur de piste TE = ES - FS est formé à partir de la différence des tensions photoélectriques ES et FS du troisième et du quatrième détecteur photoélectrique (E, F) et que les tensions photoélectriques ES et FS sont soustraites de la différence de la tension photoélectrique du premier détecteur photoélectrique (11) et de la tension photoélectrique PS du second détecteur photoélectrique (12).

3. Méthode selon la revendication 2, caractérisée en ce qu'un cinquième détecteur photoélectrique (G) est prévu sur lequel le support d'enregistrement magnéto-optique (6) réfléchit les faisceaux d'ordre supérieur à l'ordre + 1, dont les plans de polarisation sont tournés dans l'une des directions, qu'un sixième détecteur photoélectrique (H) est prévu sur lequel le support d'enregistrement magnéto-optique (6) réfléchit les faisceaux d'ordre inférieur à l'ordre - 1, dont les plans de polarisation sont tournés dans l'une des directions, et que les tensions photoélectriques GS et HS du cinquième et du sixième détecteur photoélectrique (G, H) sont soustraites de la différence de la tension photoélectrique du premier détecteur photoélectrique (11), de la tension photoélectrique du second détecteur photoélectrique (12) et des tensions photoélectriques du troisième et du quatrième détecteur photoélectrique (E, F).
